# EUROPEAN PATENT APPLICATION

(11) **EP 1 796 409 A2**
(43) Date of publication of application: **13.06.2007**
(21) Application number: 06125583.2
(22) Date of filing: 07.12.2006
(51) Int. Cl.: H04Q 7/32, H04L 12/28, H04Q 7/38

(54) **Device, system and method for transmitting interworking information of mobile communication system and broadband wireless access system**

(30) Priority: 08.12.2005 KR 20050119999; 15.06.2006 KR 20060053864
(71) Applicant: ELECTRONICS AND TELECOMMUNICATIONS RESEARCH INSTITUTE, Daejeon-city 305-350 (KR)
(72) Inventor: Baek, Seung-Kwon, Yusung-gu, Daejeon (KR); Park, Ji-Soo, Seo-gu, Daejeon (KR); Song, Jae-Su, Seo-gu, Daejeon (KR); Kim, Won-Ik, Seoul (KR); Shin, Yeon-Seung, Yuseong-gu, Daejeon (KR); Kim, Yeong-Jin, Seo-gu, Daejeon (KR)
(74) Representative: Betten & Resch

(57) **Abstract**

The present invention relates to a system and method for transmitting interworking information of a mobile communication system and a broadband wireless access system. In the method, a cell broadcasting service message or system information including interworking information of the broadband wireless access system is received, and a communication connection between a mobile terminal and the broadband wireless access system is established based on the cell broadcasting service message or the system information. In addition, an interworking system of the mobile communication system and the broadband wireless access system transmits, by using a cell broadcasting service or system information broadcasted by the mobile communication system, broadband wireless access system information to a mobile terminal used in the two systems.

## Description

### BACKGROUND OF THE INVENTION

### (a) Field of the Invention

The present invention relates to a handover method between heterogeneous systems. More particularly, the present invention relates to a device, system, and method for transmitting interworking information of a mobile communication system and a broadband wireless access system.

### (b) Description of the Related Art

Standards for current mobile communication systems are set and developed by a Universal Mobile Communication System (UMTS) of the Third Generation Partnership Project (3GPP) and a code division multiple access 2000 (CDMA2000) system of the 3GPP2. It is predicted that these systems will be developed into a third generation evolution system. Differing from the mobile communication system, a plurality of wireless communication systems including a wireless local access network (WLAN) and a broadband wireless access (BWA) system are developed to provide a high data communication service in an area.

In a network environment having a plurality of interlocked access systems, it is required to perform handover and interworking operations between heterogeneous access systems since mobile terminals having a multimode function are used. Particularly, a module for performing a wireless access function of a terminal has a problem in that it is required to periodically activate the module and to search a broadband wireless access system by an external method.

In addition, since the module for performing the wireless access function of the terminal does not include an element for performing a function for managing an interworking operation between the mobile communication system network and the broadband wireless access system network, the mobile terminal may not generate and transmit information of the interworked broadband wireless access system to the mobile terminal. Further, since a handover delay is increased when the module for performing the wireless access function of the terminal is included, it is difficult to provide a flexible service.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a device, system, and method for transmitting interworking information of a mobile communication system and broadband wireless access system.

In an exemplary method for transmitting interworking information of a mobile communication system and a broadband wireless access system according to an embodiment of the present invention, a) a cell broadcasting service message or system information including interworking information of the broadband wireless access system is received, and b) a communication connection between a mobile terminal and the broadband wireless access system is established based on the cell broadcasting service message or the system information.

An exemplary system for receiving interworking information of a mobile communication system and a broadband wireless access system according to an embodiment of the invention includes a signal receiving unit, a broadband wireless access module, a mobile communication system access unit, and a controller. The signal receiving unit receives, from the mobile communication system, a cell broadcasting service message or system information including the interworking information of the broadband wireless access system. The broadband wireless access module activates/deactivates a broadband wireless access module according to a signal process with the broadband wireless access system. The mobile communication system access unit activates/deactivates a mobile communication access module according to the signal process with the broadband wireless access system. The controller establishes a communication connection between a mobile terminal and the broadband wireless access system based on the cell broadcasting service message or the system information.

An exemplary system for transmitting interworking information of a mobile communication system and a broadband wireless access system according to an embodiment of the invention includes an inter access system handover controller (IAHC), a cell broadcasting center, and a radio access network. The IAHC collects network information of a heterogeneous access system from an external network, and transmits the network information. The cell broadcasting center generates a cell broadcasting service message including the interworking information of the broadband wireless access system, and broadcasts the cell broadcasting service message, according to a control operation of the IAHC. The radio access network generates system information including the cell broadcasting service message or the interworking information and broadcasts the system information to the mobile terminal, according to a control operation of the cell broadcasting center or the IAHC.

in an exemplary method for transmitting interworking information of a mobile communication system and a broadband wireless access system according to another embodiment of the invention, a) a cell broadcasting service message or system information including the interworking information of the broadband wireless access system is generated, and the cell broadcasting service message or the system information is transmitted to a mobile terminal, and b) a control message is received from the mobile terminal, and a communication connection to the mobile terminal is established.

### BRIEF DESCRIPTION OF THE DRAWINGS

FIG. 1 shows a diagram of configurations of a mobile communication system and a broadband wireless access system, and an interworking configuration between the mobile communication and broadband wireless access systems according to an exemplary embodiment of the present invention.
FIG. 2 shows a diagram representing overlapped cells of the mobile communication system and the broadband wireless access system according to the exemplary embodiment of the present invention.
FIG. 3 shows a diagram of a network configuration for a cell broadcasting center suggested by the 3GPP TS 23.041.
FIG. 4 shows a diagram of a network configuration in which the network configuration shown in FIG. 3 interworks with an inter access system handover controller (IAHC) according to the exemplary embodiment of the present invention.
FiG. 5 shows a diagram representing a process for exchanging protocol messages for a cell broadcasting service (CBS) in the network for the CBS shown in FIG. 3.
FIG. 6 shows a diagram representing a protocol message exchange process for transmitting broadband wireless access system information in the network shown in FIG. 5 interworking with the IAHC according to the exemplary embodiment of the present invention.
FIG. 7 shows a diagram representing a message exchange process for transmitting system information suggested by the 3GPP TS 25.331.
FIG. 8 shows a message flowchart representing an operational process with the broadband wireless access system and a method for transmitting the broadband wireless access system information to the mobile terminal of the idle state by using the cell broadcasting service (CBS) according to the exemplary embodiment of the present invention.
FIG. 9 shows a message flowchart representing an operational process for transmitting information of the broadband wireless access system to the mobile terminal in a data transmission state by using the CBS according to the exemplary embodiment of the present invention, with respect to the broadband wireless access system.
FIG. 10 shows a message flowchart representing an operational state for using a system information block (SIB) broadcasting process according to the exemplary embodiment of the present invention to transmit the information of the broadband wireless access system to the mobile terminal in an idle state.
FIG. 11 shows a message flowchart representing an operational state for using the SIB broadcasting process according to the exemplary embodiment of the present invention to transmit the information of the broadband wireless access system to the mobile terminal in the data transmission state.
FIG. 12 shows a diagram representing broadband wireless access system information included in the broadcasting information transmitted to the mobile communication system according to the exemplary embodiment of the present invention.
FIG. 13 shows a block diagram of an internal configuration of the IAHC according to the exemplary embodiment of the present invention.
FIG. 14 shows a block diagram of an internal configuration of the mobile terminal according to the exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Unless explicitly described to the contrary, the word "comprise" and variations such as "comprises" or "comprising" will be understood to imply the inclusion of stated elements but not the exclusion of any other elements.

In addition, the word "module" will be understood to indicate a unit for processing a predetermined function or operation, which may be realized by hardware, software, or a combination thereof.

A device, system, and method for transmitting interworking information between a mobile communication system and a broadband wireless access system according to an exemplary embodiment of the present invention will now be described with reference to the figures.

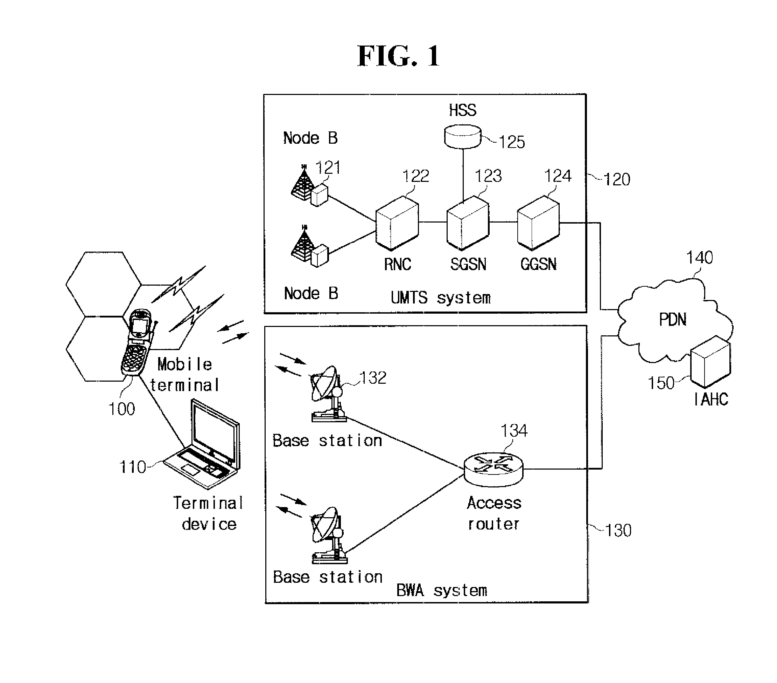

FIG. 1 shows a diagram of configurations of the mobile communication system and the broadband wireless access system, and an interworking configuration between the mobile communication and broadband wireless access systems according to an exemplary embodiment of the present invention.

An interworking system between the mobile communication system and the broadband wireless access system according to the exemplary embodiment of the present invention includes a mobile terminal 100, a terminal device 110, a universal mobile communication system 120, a broadband wireless access system 130, a public data network (PDN) 140, and an inter access system handover controller (IAHC) 150.

The mobile terminal 100 provides a communication service between access systems respectively having different operation methods. That is, the mobile terminal 100 may access both the universal mobile communication system 120 and the broadband wireless access system 130.

The terminal device 110 includes a personal digital assistant (PDA) and a personal computer (PC) system that have an information processing function by wired/wireless communications and data input/output, and any devices for wireiessiy transmitting and receiving data to/from the mobile terminal 100, the universal mobile communication system 120, and the broadband wireless access system 130.

The universal mobile telecommunication systems (UMTS) 120 includes a Node B 121, a radio network controller 122, a serving general packet radio service (GPRS) support node (SGSN) 123, a gateway GPRS support node (GGSN) 124, and a home subscriber server (HSS) 125.

The Node B 121, wirelessly connected to the mobile terminal 100, supports a frequency division duplex mode and a time division duplex mode, and supports a dual mode including the frequency and time division duplex modes.

The radio network controller (RNC) 122 performs a wired and wireless channel management function, a protocol interface function of the mobile communication terminal and a test unit, a protocol interface function of a base station, a soft hand-off process, a protocol interface function to a core network, a general packet radio service (GPRS) access function, a fault control function, and a system loading function. The radio network controller 122 accessed to the Node B 121 controls a wireless access process, and performs a media access control function.

The radio network controller 122 broadcasts a cell broadcasting service message or system information including interworking information for the broadband wireless access system 130.

For a GPRS, the SGSN 123 supports a terminal mobility managing function, a transmitting/receiving signal process, a session management function for transmitting/receiving packet data, and an authentication and account function, and it performs a routing process function of the packet data.

The GGSN 124 providing a high speed packet data service for the GPRS in an Internet protocol (lP)-based packet network manages a session for the packet data service, performs a routing function of the packet data, and provides an interface for connecting the Internet network to a wideband code division multiple access network (WCDMA). The HSS 125 manages subscriber information and service states.

The broadband wireless access system 130 includes a base station (BS) 132 and an access router (AR) 134.

The base station 132 transmits/receives data to/from the mobile terminal 100 through a radio channel, a physical layer protocol (PHY) for performing radio frequency, intermediate frequency, and baseband processing functions, and a media access control (MAC) for operating the PHY, and the base station 132 interworks with the mobile terminal 100 to perform an access control function of a radio link.

The access router 134 controls an interworking operation between the base station 132 and the public data network 140, and performs an external agent function of the mobile Internet protocol to support mobility of a dual-mode terminal.

The public data network 140 provides a data communication service to the access router 134 and the GGSN 124.

The IAHC 150 collects network information of the heterogeneous access system from the public data network 140 and transmits it to the universal mobile communication system 120 and the broadband wireless access system 130.

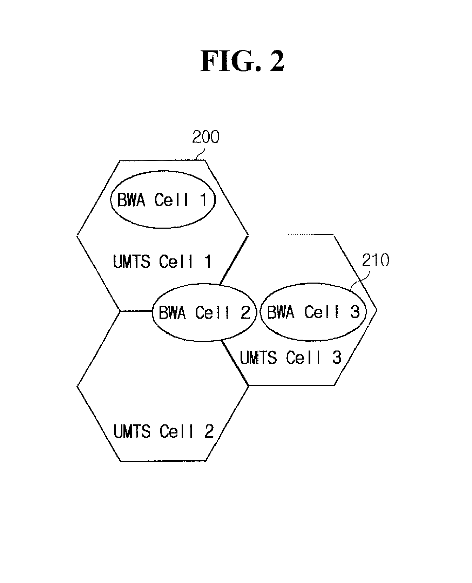

FIG. 2 shows a diagram representing overlapped cells of the mobile communication system and the broadband wireless access system.

The universal mobile communication system 120 provides a nationwide service, and the broadband wireless access system 130 provides a local area service. The universal mobile communication system 120 has a macro cell 200 for providing a wide range service, and the broadband wireless access system 130 has a micro cell 210 that is smaller than the cell of the universal mobile communication system 120. Accordingly, the broadband wireless access system 130 provides a service in a narrow and a limited area. Therefore, the broadband wireless access system 130 spends a lot of time and power periodically activating a wireless access module for the broadband wireless access system 130 to detect the base station 132 of the broadband wireless access system 130 so that the mobile terminal 100 may access the base station 132.

In addition, in the universal mobile communication system 120, the mobile terminal 100 may continuously receive broadcasting information in an idle state. Accordingly, the universal mobile communication system 120 uses the broadcasting information to transmit a location of the broadband wireless access system 130 including the mobile terminal 100 to the mobile terminal 100 so that the location of the broadband wireless access system 130 may be efficiently detected and power consumption of the mobile terminal 100 may be minimized.

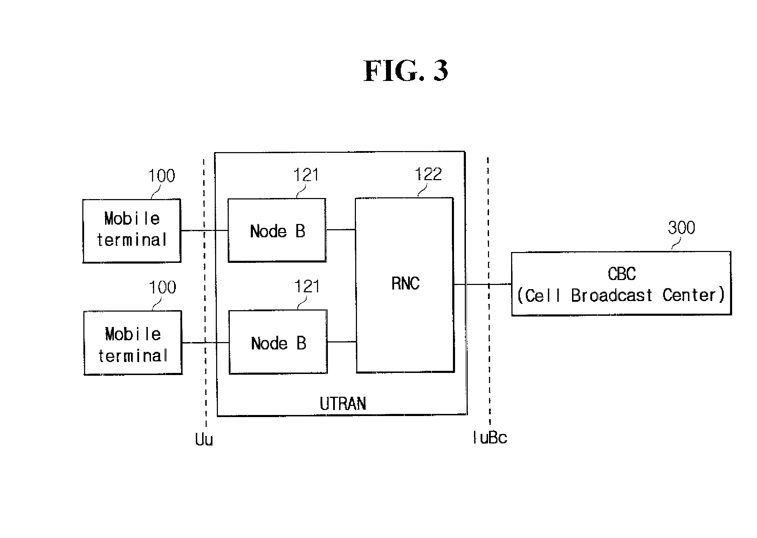

FIG. 3 shows a diagram of a network configuration for a cell broadcasting center suggested by the 3GPP TS 23.041.

Hereinafter, descriptions of constituent elements having been described in FIG. 1 will be omitted.

A first method for broadcasting information relating to the interworked broadband wireless access system 130 to the mobile terminal 100 uses a cell broadcasting service according to the exemplary embodiment of the present invention.

In the universal mobile communication system 120, the cell broadcasting service for broadcasting data to mobile terminals 100 in a predetermined cell is provided.

A cell broadcasting center 300 generates a broadcasting message including channel information for the interworked broadband wireless access system 130 in the predetermined cell to periodically transmit the broadcasting message through a UMTS radio access network (UTRAN). A message transmitted to the cell broadcasting service is generated by the cell broadcasting center 300 connected to the radio network controller (RNC) 122 through an interface unit block control (luBC) interface. The cell broadcasting center 300 transmits the broadcasting message to the radio network controller 122 by using the luBC interface.

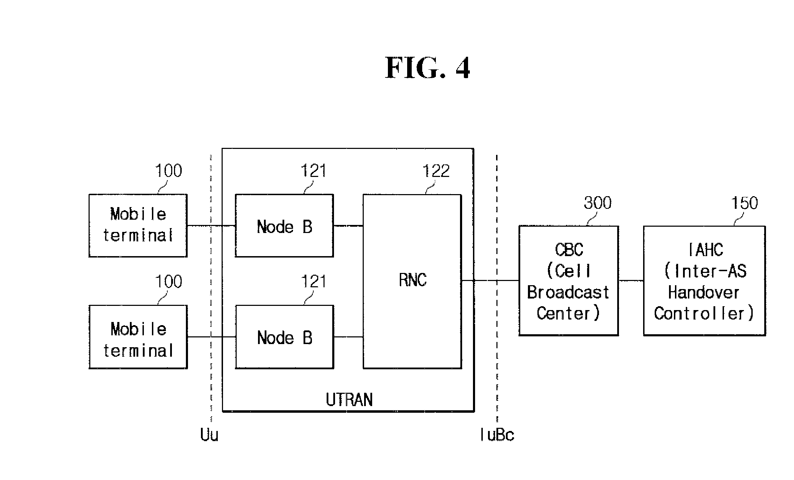

FIG. 4 shows a diagram of a network configuration in which the network configuration shown in FIG. 3 interworks with the IAHC according to the exemplary embodiment of the present invention.

In FIG. 4, to transmit system information for performing an interworking operation between the universal mobile communication system 120 and the broadband wireless access system 130, the network configuration shown in FIG. 3 interworks with the IAHC 150 shown in FIG. 1. That is, when there is the broadband wireless access system 130 to be interworked with, the IAHC 150 collects information of the corresponding broadband wireless access system 130 and transmits the collected information to the cell broadcasting center 300 through an interface between the cell broadcasting center 300 and the IAHC 150 so that the mobile terminal 100 may detect the broadband wireless access system 130.

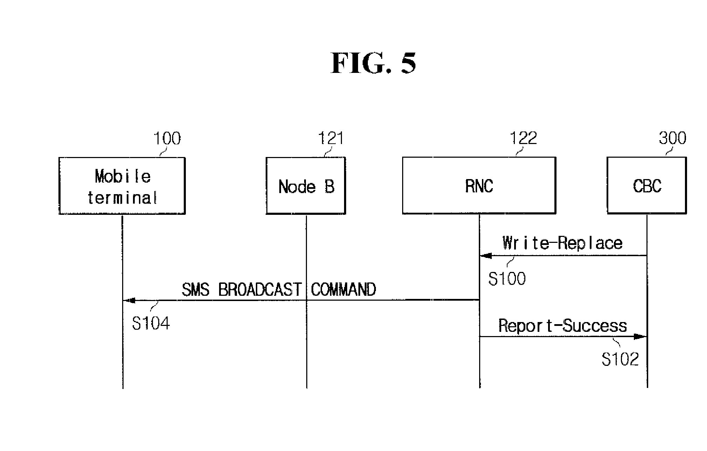

FIG. 5 shows a diagram representing a process for exchanging protocol messages for the cell broadcasting service in the network for the CBS shown in FIG. 3.

The cell broadcasting center 300 generates a Write-Replace message, and transmits the message to the radio network controller 122. Here, the Write-Replace message is transmitted from the cell broadcasting center 300 to the radio network controller 122, and is used when a new cell broadcasting service message is broadcasted or when the existing cell broadcasting service message is replaced.

The radio network controller 122 generates a Report-Success message in response to the Write-Replace message received from the cell broadcasting center 300, and transmits the Report-Success message to the cell broadcasting center 300. Here, the Report-Success message is used as a response message of the Write-Replace message.

When receiving the Write-Replace message from the cell broadcasting center 300, the radio network controller 122 generates an SMS BROADCAST COMMAND message for transmitting the cell broadcasting service message, and transmits the SMS BROADCAST COMMAND message to the dual-mode terminal.

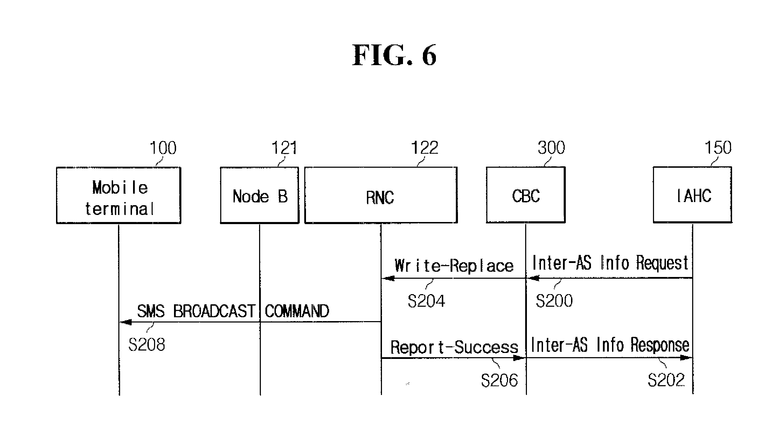

FIG. 6 shows a diagram representing a protocol message exchange process for transmitting broadband wireless access system information in the network shown in FIG. 5 interworking with the IAHC according to the exemplary embodiment of the present invention.

The IAHC 150 generates an Inter-AS Info Request message and transmits the Inter-AS Info Request message to the cell broadcasting center 300. Here, the Inter-AS Info Request message is used to transmit information of the accessible broadband wireless access system 130 and cell information of a corresponding system to the broadcasting center 300.

When receiving the Inter-AS Info Request message from the IAHC 150, the cell broadcasting center 300 generates an Inter-AS Info Response message in response to the Inter-AS Info Request message, and transmits the Inter-AS Info Response message to the IAHC 150. Here, the Inter-AS Info Response message is used as a response message of the Inter-AS Info Request message.

When receiving the Inter-AS Info Request message, the cell broadcasting center 300 generates and transmits a Write-Replace message to the radio network controller 122. Subsequently, when receiving the Write-Replace message from the cell broadcasting center 300, the radio network controller 122 generates a Report-Success message in response to the Write-Replace message, and transmits the Report-Success message to the cell broadcasting center 300.

When receiving the Write-Replace message from the cell broadcasting center 300, the radio network controller 122 generates an SMS BROADCAST COMMAND message to transmit the cell broadcasting service message, and transmits the SMS BROADCAST COMMAND message to the dual-mode terminal.

Another method for broadcasting information of the interlocked broadband wireless access system 130 according to the exemplary embodiment of the present invention to the mobile terminal 100 is to use a process for transmitting a system information block (SIB) periodically broadcasted from the radio network controller 122.

The universal mobile communication system 120 uses a primary-common control physical channel (P-CCPCH) and a secondary-common control physical channel (S-CCPCH) to transmit common information for providing a communication service. The P-CCPCH is used to transmit the SIB relating to a corresponding cell to the mobile terminal 100 moved to a new cell. The mobile terminal 100 having no exclusive data transmission channel uses the P-CCPCH to receive a service from predetermined cell information.

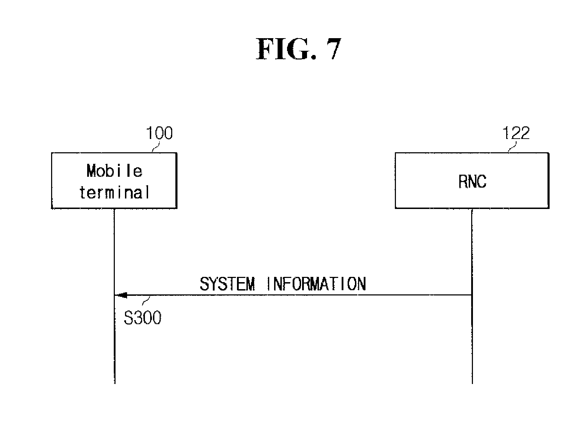

FIG. 7 shows a diagram representing a message exchange process for transmitting system information suggested by the 3GPP TS 25.331.

In the current 3GPP standard, 18 SIBs are defined, and particularly, a SIB 11 or a SIB 12 is used to transmit information of a cell neighboring a corresponding cell.

In addition, the SIB 11 and the SIB 12 include cell information and measurement information of radio access technology (RAT).

In the current standard, the RTA including a global system for mobile communication (GSM) and a code division multiple access (CDMA) 2000 is described. Accordingly, in the exemplary embodiment of the present invention, since the cell information and the system information of the broadband wireless access system 130 are provided to the SIB 11 and the SIB 12 that are periodically broadcasted from the radio network controller 122, the mobile terminal 100 may determine whether there is the accessible broadband wireless access system 130.

The radio network controller 122 periodically broadcasts the system information including the cell information and the system information of the broadband wireless access system 130 to the mobile terminal 100.

A process for transmitting interworking information of the universal mobile communication system 120 and the broadband wireless access system 130 and a handover process will now be described. In the process as follows, the UTMS cell 1 and the BWA cell 1 are overlapped as shown in FIG. 2, and the handover is performed from the universal mobile communication system 120 to the broadband wireless access system 130.

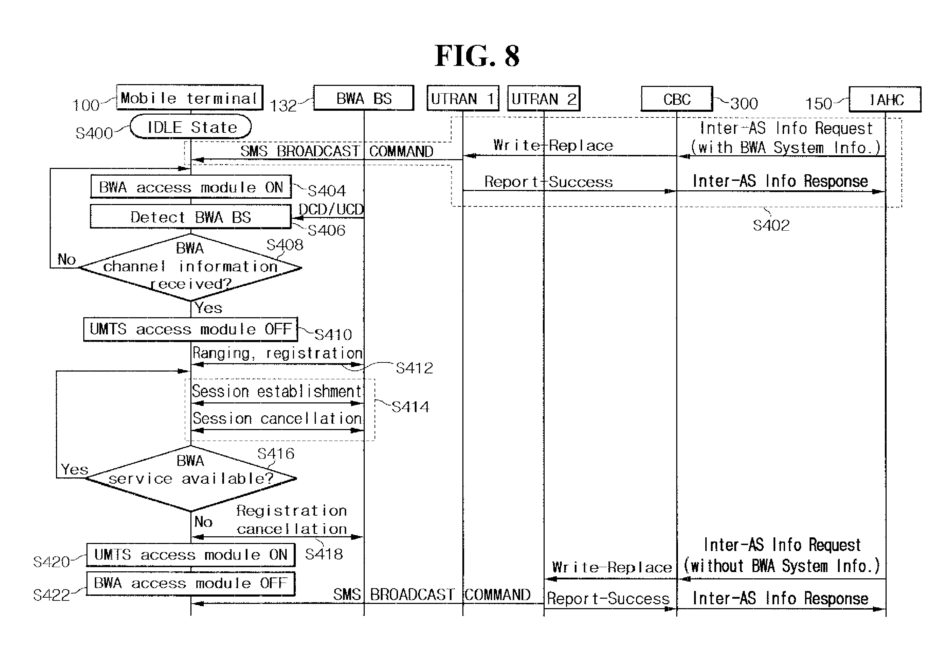

FIG. 8 shows a message flowchart representing an operational process with the broadband wireless access system and a method for transmitting the broadband wireless access system information to the mobile terminal of the idle state by using the cell broadcasting service (CBS) according to the exemplary embodiment of the present invention.

In the idle state S400 of the mobile terminal 100, power of a UTMS access module is activated while initial power of the mobile terminal 100 is activated, or a call or a session is finished.

After receiving a broadcasting message provided in the cell broadcasting service, the mobile terminal 100 receives information of the broadband wireless access system 130 and the cell from the IAHC 150 in step S402.

Since a process for receiving the information of the broadband wireless access system 130 and the cell has been described in FIG. 6, a detailed description will be omitted here.

The mobile terminal 100 detects the neighboring broadband wireless access system 130 and activates a BWA module in step S404. In addition, the mobile terminal 100 uses the received information of the broadband wireless access system 130 and the cell to receive a downlink channel descriptor (DCD)/uplink channel descriptor (UCD) message, which is downlink and uplink channel information of the broadband wireless access system 130, in step S406.

The mobile terminal 100 verifies the received BWA channel information to determine whether it is possible to access the broadband wireless access system 130, in step S408.

When the broadband wireless access system 130 is accessible, the mobile terminal 100 inactivates the activated UTMS access module in step S410. Subsequently, the mobile terminal 100 uses the received DCD/UCD message to perform an uplink random access process and to perform ranging and registration processes in step S412. Accordingly, the mobile terminal 100 may receive the service from the broadband wireless access system 130, and session establishment and cancellation processes are performed in step S414. ln step S414, there is no existing session since the mobile terminal in the idle state is accessed to the broadband wireless access system 130, and the predetermined session establishment and cancellation processes are performed when the service is provided in response to a user's demand.

According to the intensity of the downlink signal of the base station 132, the mobile terminal 100 determines whether the current broadband wireless access system 130 is accessible, and periodically determines to maintain the access to the broadband wireless access system 130 in step S416.

When it is determined in step S416 that the mobile terminal 100 is not accessible to the broadband wireless access system 130, the mobile terminal 100 cancels the registration process of the broadband wireless access system 130 in step S418. Subsequently, the mobile terminal 100 activates the UTMS access module In step S420, and deactivates the BWA module in step S422.

When the mobile terminal 100 receives the broadcasting message provided by the cell broadcasting service process of the newly accessed UTRAN 2 and corresponding information includes broadband wireless access system and cell information, the mobile terminal 100 repeatedly performs the step S404.

When it is determined in step S416 that the mobile terminal 100 is accessible to the broadband wireless access system 130, the step 414 is performed.

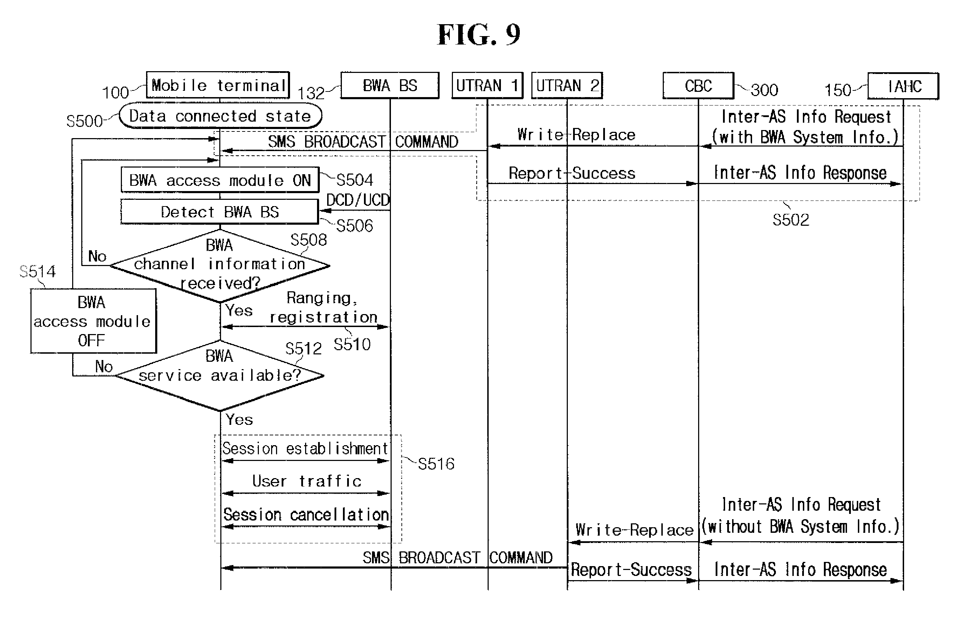

FIG. 9 shows a message flowchart representing an operational process for transmitting information of the broadband wireless access system to the mobile terminal in a data transmission state by using the cell broadcasting service CBS according to the exemplary embodiment of the present invention, with respect to the broadband wireless access system.

In the data transmission state of the mobile terminal 100, the mobile terminal 100 establishes a traffic channel with the UTRAN 1, it transmits/receives a data packet, and power of the UTMS access module is activated in step S500. The mobile terminal 100 receives the broadcasting message provided by the cell broadcasting service process, and receives the broadband wireless access system and cell information provided from the IAHC 150, in step S502. The mobile terminal 100 detects the neighboring broadband wireless access system 130 and activates the BWA module in step S504.

The mobile terminal 100 uses the received broadband wireless access system and cell information to receive a downlink channel descriptor (DCD)/uplink channel descriptor (UCD) message, which is downlink and uplink information of the broadband wireless access system 130, in step S506. Subsequently, the mobile terminal 100 verifies the received BWA channel information to determine in step S508 whether the mobile terminal is accessible to the broadband wireless access system 130.

When it is determined in step S508 that the mobile terminal is accessible to the broadband wireless access system 130, the mobile terminal 100 uses the received DCD/UCD message to perform an uplink random access process to receive a channel, and performs a ranging and registration process in step S510.

When it is determined in step S508 that the mobile terminal 100 is not accessible to the broadband wireless access system 130, the step S504 is performed.

Subsequently, according to the intensity of the downlink signal of the base station 132, the mobile terminal 100 determines whether the current broadband wireless access system 130 is accessible, and periodically determines to maintain the access to the broadband wireless access system 130 in step S512.

When the mobile terminal 100 is accessible to the broadband wireless access system 130 in step S512, the mobile terminal 100 may receive a service from the broadband wireless access system 130, and a session establishment process, a user traffic transmitting/receiving process, and a session cancellation process are performed according to a request for a service from the mobile terminal 100 in step S516.

When the mobile terminal 100 is not accessible to the broadband wireless access system 130 in step S512, the mobile terminal 100 deactivates the BWA module in step S514, and the step S502 is performed.

Subsequently, when the mobile terminal 100 receives the broadcasting message provided by the cell broadcasting service of the newly accessed UTRAN 2 and the corresponding information includes the broadband wireless access system and cell information, the step S504 is repeatedly performed.

When there is an error in the ranging and registration process to the base station 132, the mobile terminal 100 may not perform the handover to the broadband wireless access system 130, and it uses the universal mobile communication system 120 to perform a service.

According to the exemplary embodiment of the present invention, since initialization and registration processes of the broadband wireless access system 130 are performed before the UMTS access module is deactivated, a session or a call establishment delay may be reduced when the mobile terminal 100 in a data connected mode performs the handover.

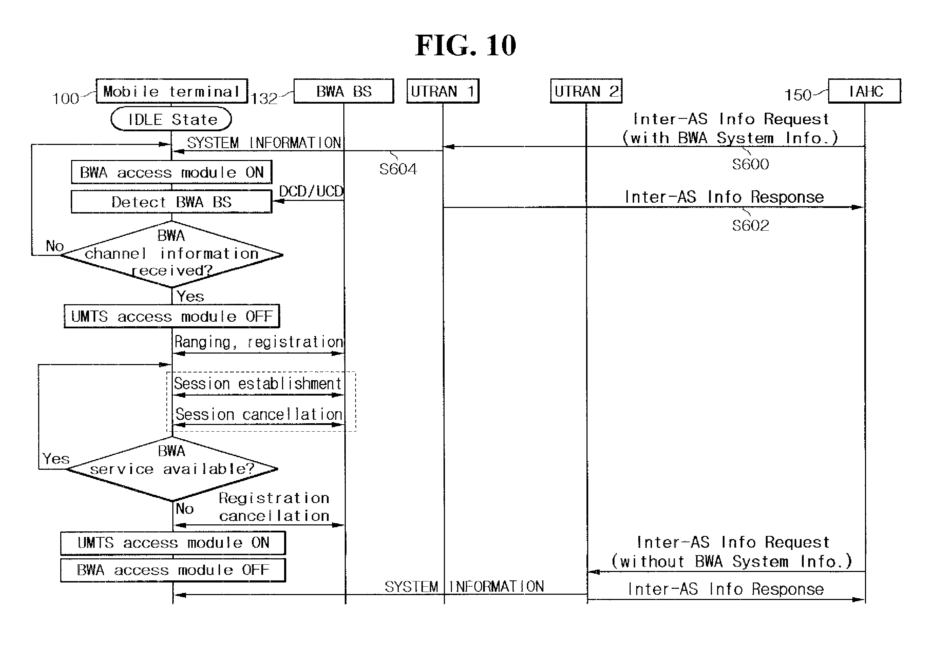

FIG. 10 shows a message flowchart representing an operational state for using the SIB broadcasting process according to the exemplary embodiment of the present invention to transmit the information of the broadband wireless access system to the mobile terminal in an idle state.

Hereinafter, parts having been described in FIG. 8 will be omitted.

In the idle state of the mobile terminal 100, initial power of the mobile terminal 100 is activated, or power of the UMTS access module is activated while a call or a session is finished.

The IAHC 150 generates an Inter-AS Info Request message to transmit interlocked system information, and transmits the Inter-AS Info Request message to the UTRAN1 in step S600. When receiving the Inter-AS Info Request message from the IAHC 150, the UTRAN1 generates an Inter-AS Info Response message in response to the Inter-AS Info Request message, and transmits the Inter-AS Info Response message to the IAHC 150 in step S602. Subsequently, the UTRAN1 periodically broadcasts system information including the cell and system information of the broadband wireless access system 130 to the mobile terminal 100 in step S604.

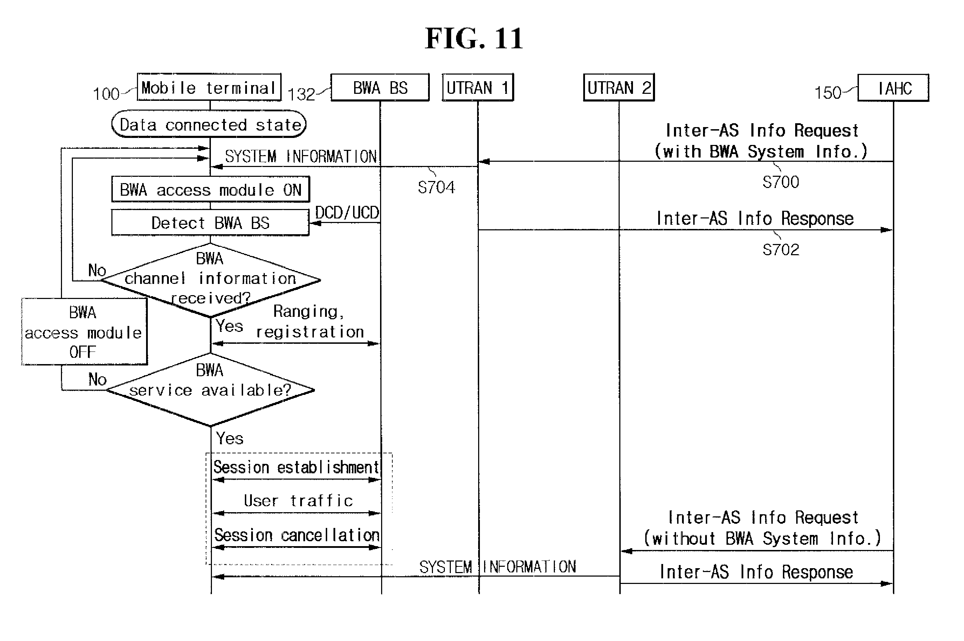

FIG. 11 shows a message flowchart representing an operational state for using the SIB broadcasting process according to the exemplary embodiment of the present invention to transmit the information of the broadband wireless access system to the mobile terminal in the data transmission state.

Hereinafter, the description of parts having been described in FIG. 9 will be omitted.

In the data transmission state of the mobile terminal 100, the mobile terminal 100 establishes the traffic channel to the UTRAN 1, and transmits/receives the data packet.

The IAHC 150 generates an Inter-AS Info Request message to transmit the interlocked system information, and transmits the Inter-AS Info Request message to the UTRAN 1 in step S700. When receiving the Inter-AS Info Request message from the IAHC 150, the UTRAN 1 generates an Inter-AS Info Response message in response to the Inter-AS Info Request message, and transmits the Inter-AS Info Response message to the IAHC 150 in step S702. Subsequently, the UTRAN 1 periodically broadcasts the system Information including the cell and system information of the broadband wireless access system 130 to the mobile terminal 100 in step S704.

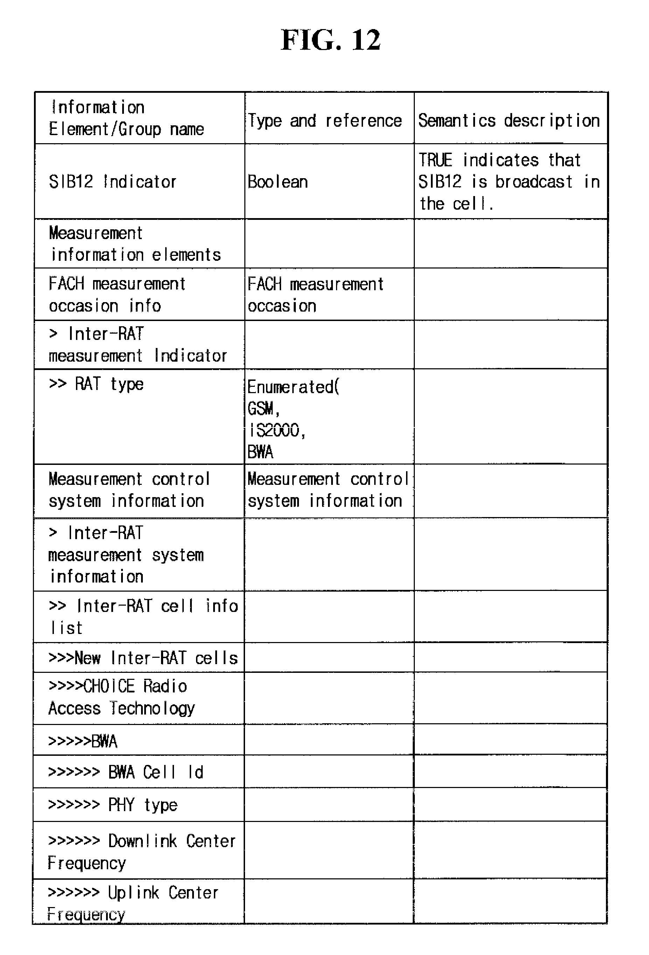

FIG. 12 shows a diagram representing broadband wireless access system information included in the broadcasting information transmitted to the mobile communication system according to the exemplary embodiment of the present invention.

The IAHC 150 transmits the broadband wireless access system information including a cell ID, a physical layer type, a downlink center frequency, and an uplink center frequency to the cell broadcasting center 300 or the radio network controller 122 of the UTRAN to transmit initial access information and ceil information to the interlocked broadband wireless access system 130. Here, the cell ID is a cell identifier of the broadband wireless access system 130, and the physical layer protocol type defines a physical layer type of the current broadband wireless access system 130.

The broadband wireless access system information is used to reduce a delay in an initial radio access process of a terminal.

In addition, the broadband wireless access system information is transmitted by an independent message when the cell broadcasting service (CBS) is used, and further includes a SIB 11 and a SIB 12 when the system information block (SIB) is used.

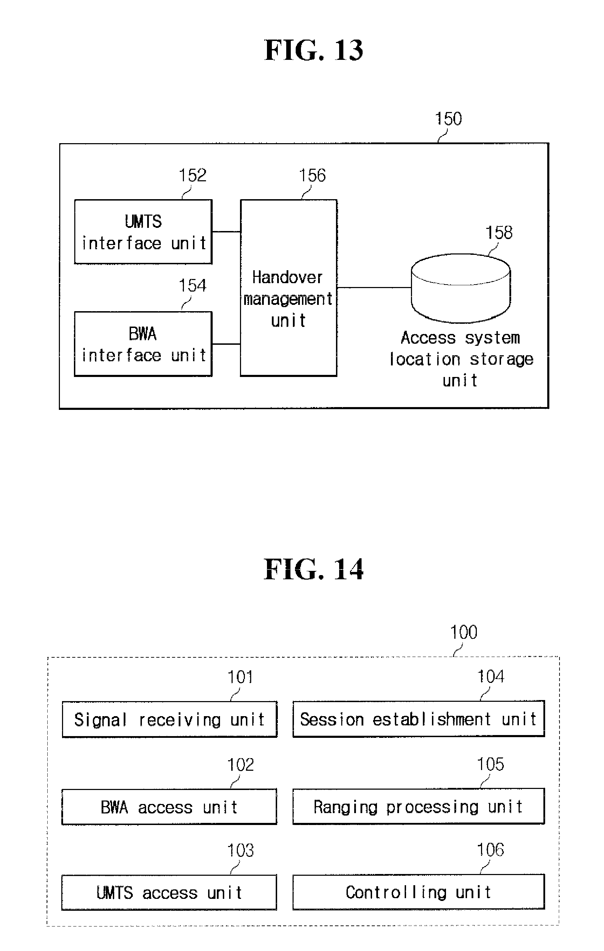

FIG. 13 shows a block diagram of an internal configuration of the IAHC according to the exemplary embodiment of the present invention.

The IAHC 150 according to the exemplary embodiment of the present invention includes an UMTS interface unit 152, a BWA interface unit 154, a handover management unit 156, and an access system location storage unit 158.

The UMTS interface unit 152, an interface for the broadcast of the universal mobile communication system 120, performs a logical interface function with the cell broadcasting center 300 when the cell broadcasting service is used. In addition, the UMTS interface unit 152 performs the logical interface function with the UTRAN when the SIB service is used.

The BWA interface unit 154 performs the logical interface function with the base station 132 of the broadband wireless access system 130.

The handover management unit 156 interworks with the access system location storage unit 158, generates the broadband wireless access system information suggested in FIG. 12 for the CBS or the SIB service, and transmits the broadband wireless access system information to the UMTS interface unit 152.

The handover management unit 156 collects the system information and the cell information of the interlocked BWA base station 132 through the BWA interface unit 154.

The access system location storage unit 158 performs a database function to store the broadband wireless access system information and the cell information collected by the handover management unit 156, and currently located cell information.

FIG. 14 shows a block diagram of an internal configuration of the mobile terminal according to the exemplary embodiment of the present invention.

The mobile terminal 100 according to the exemplary embodiment of the present invention includes a signal receiving unit 101, a BWA access unit 102, an UMTS access unit 103, a session establishment unit 104, a ranging processing unit 105, and a controlling unit 106.

The signal receiving unit 101 receives the system information and the cell broadcasting service message including interworking information from the radio network controller 122 of the UTRAN. Here, the interworking information, which is system information on the broadband wireless access system 130, includes at least one of the cell ID, the physical layer type, the downlink center frequency, and the uplink center frequency.

The signal receiving unit 101 receives the downlink and uplink channel information of the broadband wireless access system 130.

The BWA access unit 102 activates/deactivates the broadband wireless access module, and performs an interface function with the broadband wireless access system 130.

The UMTS access unit 103 activates/deactivates a mobile communication access module, and performs an interface function with the universal mobile communication system 120.

The session establishment unit 104 performs a session establishment function, a data traffic function, and a session cancellation function with the broadband wireless access system 130.

The ranging processing unit 105 uses the channel information received from the signal receiving unit 101 to perform the uplink random access process and receive a channel, and performs the ranging and registration processes with the broadband wireless access system 130.

The controlling unit 106 uses the channel information received from the signal receiving unit 101, and determines whether the broadband wireless access system 130 is accessible.

The controlling unit 106 analyzes the received cell broadcasting service message or system information to connect a communication to the universal mobile communication system 120 or the broadband wireless access system 130.

The controlling unit 106 determines whether the broadband wireless access system 130 is accessible, according to the intensity of the downlink signal of the base station 132.

The above-described methods and apparatuses are not only realized by the exemplary embodiment of the present invention, but, on the contrary, are intended to be realized by a program for realizing functions corresponding to the configuration of the exemplary embodiment of the present invention or a recording medium for recording the program.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

According to the exemplary embodiment of the present invention, power consumption of the mobile terminal may be minimized, and the cell information and the system information of the BWA system may be efficiently provided.

In addition, when the handover is performed from the rnobt!e communication system to the BWA system, the handover delay may be reduced since an initial radio access process of the BWA system and a signaling process for a service are performed while the mobile communication system operates.

## Claims

1. A method for transmitting interworking information of a mobile communication system and a broadband wireless access system, the method comprising:
a) receiving a cell broadcasting service message or system information including interworking information of the broadband wireless access system; and
b) establishing a communication connection between a mobile terminal and the broadband wireless access system based on the cell broadcasting service message or the system information.

2. The method of claim 1, wherein, when the mobile terminal is in an idle state, b) comprises:
b1-1) activating a broadband wireless access module, and receiving downlink and uplink channel information of the broadband wireless access system;
b2-1) using the received channel information, and deactivating the activated mobile communication system module when the mobile terminal is accessible to the broadband wireless access system;
b3-1) using the received channel information, and performing ranging and registration processes with the broadband wireless access system; and
b4-1) performing session establishment and cancellation processes with the broadband wireless access system, and accessing the broadband wireless access system.

3. The method of claim 2, further comprising, when the mobile terminal may not maintain an access to the broadband wireless access system:
canceling the registration process with the broadband wireless access system; and
activating the deactivated mobile communication system module, and deactivating the activated broadband wireless access module.

4. The method of claim 1, wherein, when the mobile terminal is in a data connected state, b) comprises:
b1-2) activating a broadband wireless access moduie, and receiving downlink and uplink channel information of the broadband wireless access system; and
b2-2) performing ranging and registration processes with the broadband wireless access system, and accessing the broadband wireless access system when the mobile terminal is accessible to the broadband wireless access system using the received channel information.

5. The method of claim 4, further comprising, when the mobile terminal is in the data connected state and the mobile terminal may maintain an access to the broadband wireless access system, performing a session establishment process, a user traffic transmitting/receiving process, and a session cancellation process according to a service request of the mobile terminal.

6. The method of claim 4, further comprising, when the mobile terminal is in the data connected state and the mobile terminal may not maintain an access to the broadband wireless access system, deactivating the activated broadband wireless access system.

7. The method of one of claims 1 to 6, further comprising periodically determining, by the mobile terminal, whether to maintain an access to the broadband wireless access system according to intensity of a downlink signal from a base station.

8. A system for receiving interworking information of a mobile communication system and a broadband wireless access system, the system comprising:
a signal receiving unit for receiving, from the mobile communication system, a cell broadcasting service message or system information including the interworking information of the broadband wireless access system;
a broadband wireless access module for activating/deactivating a broadband wireless access module according to a signal process with the broadband wireless access system;
a mobile communication system access unit for activating/deactivating a mobile communication access module according to the signal process with the broadband wireless access system; and
a controller for establishing a communication connection between a mobile terminal and the broadband wireless access system based on the cell broadcasting service message or the system information.

9. The system of claim 8, wherein the interworking information comprises system and cell information on the broadband wireless access system.

10. The system of claim 8, wherein the interworking information comprises at least one of a cell ID, a physical layer type, a downlink center frequency, and an uplink center frequency.

11. A system for transmitting interworking information of a mobile communication system and a broadband wireless access system, the system comprising:
an inter access system handover controller (IAHC) for collecting network information on a heterogeneous access system from an external network, and transmitting the network information;
a cell broadcasting center for generating a cell broadcasting service message including the interworking information of the broadband wireless access system, and broadcasting the cell broadcasting service message, according to a control operation of the IAHC; and
a radio access network for generating system information including the cell broadcasting service message or the interworking information, and broadcasting the system information to the mobile terminal according to a control operation of the cell broadcasting center or the IAHC.

12. The system of claim 11, wherein the IAHC comprises:
an interface unit for performing a logical interface function with the mobile communication system or the broadband wireless access system;
a handover management unit for receiving the interworking information of the broadband wireless access system from the interface, and performing a cell broadcasting service or a system information block service; and
a location storage unit for periodically storing the interworking information of the broadband wireless access system received by the handover management unit.

13. The system of claim 11 or 12, wherein the interworking information is transmitted by an independent message when a cell broadcasting service is used, and it is transmitted to the mobile terminal while adding an information individual to the system information when information blocks are used.

14. The system of claim 11 or 12, wherein the interworking information comprises at least one of a cell ID, a physical layer type, a downlink center frequency, and an uplink center frequency.

15. The system of one of claims 11 to 14, wherein the mobile terminal scans the broadband wireless access system based on the ce!! broadcasting service message or the system information and establishes a connection to the broadband wireless access system.

16. The system of one of claims 11 to 15, wherein the mobile terminal uses the connected mobile communication system to perform a mobile communication service when an error occurs while ranging and registration processes are performed with the broadband wireless access system.

17. A method for transmitting interworking information of a mobile communication system and a broadband wireless access system, the method comprising:
a) generating a cell broadcasting service message or system information including the interworking information of the broadband wireless access system, and transmitting the cell broadcasting service message or the system information to a mobile terminal; and
b) receiving a control message from the mobile terminal, and establishing a communication connection to the mobile terminal.

18. The method of claim 17, wherein, when the mobile terminal is in an idle state, b) comprises:
generating downlink and uplink channel information of the broadband wireless access system, and transmitting the downlink and uplink channel information to the mobile terminal;
performing ranging and registration processes according to a request of the mobile terminal; and
performing session establishment and cancellation processes between the mobile terminal and the broadband wireless access system, and accessing the mobile terminal.

19. The method of claim 17, wherein, when the mobile terminal is in a data connected state, b) comprises:
generating downlink and uplink channel information of the broadband wireless access system and transmitting the downlink and uplink channel information;
performing ranging and registration processes according to a request of the mobile terminal, and accessing the mobile terminal; and
performing a session establishment process, a user traffic transmitting/receiving process, and a session cancellation process according to a service request of the mobile terminal.
